# EUROPEAN PATENT APPLICATION

(11) **EP 4 610 921 A1**
(43) Date of publication of application: **03.09.2025**
(21) Application number: 25160976.4
(22) Date of filing: 28.02.2025
(51) Int. Cl.: G06T 5/40, G09G 5/10, G06T 5/92

(54) **DISPLAY DEVICE AND OPERATIONAL METHOD THEREOF**

(30) Priority: 29.02.2024 KR 20240030160
(71) Applicant: LG Electronics Inc., Yeongdeungpo-gu Seoul 07336 (KR)
(72) Inventor: LEE, Chanho, 06772 Seoul (KR); KIM, Hyomin, 06772 Seoul (KR)
(74) Representative: Vossius & Partner Patentanwälte Rechtsanwälte mbB

(57) **Abstract**

A display device and an operating method thereof are disclosed. A display device according to at least one of various embodiments of the present disclosure comprises a controller configured to perform tone mapping to adjust luminance of input image data; and a display configured to display an image according to output image data whose luminance is adjusted by the tone mapping, wherein the controller can control to lower a saturation level of the input image data on which the tone mapping is performed and perform local tone mapping.

## Description

### BACKGROUND OF THE INVENTION

### 1.Field of the Invention

The present disclosure relates to a display device and a method of operating the same.

### 2. Discussion of the Related Art

Digital images are generally composed of three channels of RGB, and SDR (Standard Dynamic Range) images can generally express brightness in the range of 0-255 (8 bits) for each channel.

However, since the range of brightness that can be expressed in each channel is narrow in SDR images, dark areas are often not expressed properly, or bright areas are often not expressed properly.

For example, in images with a significant difference in brightness between dark and bright areas, such as a photo taken in backlight, the contrast balance is biased to one side. As a result, there can be a large difference between a scene seen with the naked eye and the SDR image that captured it. In contrast to these SDR images, images expressed in 16 or 32 bits for each channel are called HDR (High Dynamic Range) images, and HDR images have the advantage of expressing images more realistically because they have a wider range of brightness expressions.

However, since general display devices cannot express 16-bit or 32-bit gradation, 16-bit or 32-bit HDR images need to be converted into digital images with a limited dynamic range.

Tone mapping is used in the process of converting HDR images into SDR images or LDR (Low Dynamic Range) images, and can mean a technology that compresses the brightness area of an HDR image into the brightness area of an SDR image or LDR image while improving the contrast ratio.

### SUMMARY OF THE INVENTION

The present disclosure seeks to provide a display device and a driving method thereof that further improves contrast ratio and detail in a local area by using histogram information of an image.

A display device according to at least one of the various embodiments of the present disclosure comprises a controller configured to perform tone mapping to adjust luminance of input image data; and a display configured to display an image according to output image data whose luminance is adjusted by the tone mapping, wherein the controller can control to lower a saturation level of the input image data on which the tone mapping is performed and perform local tone mapping.

At this time, the controller can lower a saturation level of the input image data on which the tone mapping is performed through histogram equalization processing.

And the controller can extract histogram information of the input image data on which the tone mapping is performed.

In addition, the controller can control to perform the histogram equalization processing based on the extracted histogram information.

And the controller can perform the tone mapping by generating a base mapping curve for the entire area from the input image data, extracting information for each local area of the entire area, and generating a local mapping curve in which the information for each local area is reflected for each local area.

In addition, the controller can control the equalization processing by shifting the histogram value from the extracted histogram information according to the histogram distribution so that it is not saturated.

In addition, the controller can control the equalization processing by spreading the histogram value from the extracted histogram information according to the histogram distribution so that it is not saturated.

In addition, the display device can further include an HDR processor that performs HDR processing on the input image data.

In addition, the input image data can include image data on which HDR processing has been performed.

In addition, the controller can control the equalization processing to be performed only for images having preset grayscale values of the input image data.

In addition, the preset grayscale values may not include grayscale values representing low grayscale and high grayscale.

In addition, the controller can generate an adaptive local contrast curve for each local area from the base mapping curve based on the extracted local area information.

In addition, the local area information is extracted from a detail map generated based on pixel information of the entire area, and the detail map may include APL information and sharpness information for each local area.

According to at least one of the various embodiments of the present disclosure,

First, there is an effect of improving the contrast ratio in a local area by using the histogram information of the image, thereby improving the three-dimensionality and user immersion of the image.

Second, there is an effect of further improving the expressiveness by securing sufficient margin for contrast ratio and detail enhancement for the local area by applying a local tone curve by lowering the saturation level of the image by using the histogram information of the image.

### BRIEF DESCRIPTION OF THE DRAWINGS

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device according to an embodiment of the present disclosure.
FIG. 4 shows an example of utilizing a remote control device according to an embodiment of the present disclosure.
FIG. 5A and FIG. 5B are diagrams for explaining a horizontal mode and a vertical mode of a stand-type display device according to an embodiment of the present disclosure.
FIG. 6 is a flowchart illustrating a method of driving a display device according to an embodiment of the present disclosure.
FIG. 7 is a diagram illustrating an example of an HDR-processed image according to an embodiment of the present disclosure.
FIG. 8 is a diagram explaining a detail map of an image illustrated in FIG. 6 according to an embodiment of the present disclosure.
FIG. 9 is a diagram explaining application of gain adjustment of a local area according to detail map information according to an embodiment of the present disclosure.
FIG. 10 is a diagram explaining an example of a local contrast curve applied to a local area according to an embodiment of the present disclosure.
FIG. 11 is a diagram explaining an example of a local contrast curve applied to each APL according to an embodiment of the present disclosure.
FIG. 12 is a diagram explaining a case where different sharpnesses are applied to the same APL according to an embodiment of the present disclosure.
FIG. 13 is a block diagram of a display device according to another embodiment of the present disclosure.
FIG. 14 is a block diagram of a display device according to another embodiment of the present disclosure.
FIG. 15 is a diagram illustrating the operation of the HDR processor and the sharpness processor among the components of FIG. 13.
FIG. 16 is a drawing illustrating the operation of the histogram processor among the components of FIGs. 13 and 14.
FIG. 17 is a drawing illustrating the image before and after the application of the embodiment of the present disclosure.

### DETAILED DESCRIPTION OF THE PREFERRED EMBODIMENTS

Hereinafter, embodiments of the present disclosure will be described in detail with reference to the drawings. The suffixes "module" and "unit" for components used in the following description are merely provided only for facilitation of preparing this specification, and thus they are not granted a specific meaning or function.

Hereinafter, embodiments of the present disclosure will be described in detail with reference to the drawings. The suffixes "portion" for components used in the following description are merely provided only for facilitation of preparing this specification, and thus they are not granted a specific meaning or function.

Terms that include ordinal numbers, such as first, second, etc., may be used to describe various components, but the components are not limited by the terms. The terms are used only to distinguish one component from another.

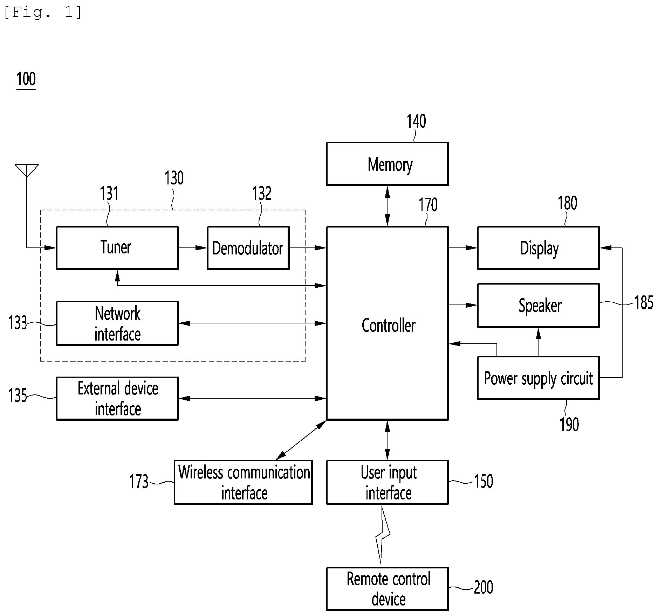

Hereinafter, the display device is described assuming a smart TV or the like that supports a broadcast reception function, but the display device may also include a smartphone or the like. That is, the display device according to the embodiment of the present disclosure does not necessarily include the components illustrated in FIG. 1.

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The network interface 133 may provide an interface for connecting the display device 100 to a wired/wireless network including an Internet network. The network interface 133 may transmit or receive data to or from other users or other electronic devices through a connected network or another network linked to the connected network.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a contents provider or a network operator. That is, the network interface 133 may receive content such as movies, advertisements, games, VOD, and broadcast signals and information related thereto provided from a contents provider or a network provider through a network.

In addition, the network interface 133 may receive update information and update files of firmware provided by the network operator, and may transmit data to an Internet or contents provider or a network operator.

The network interface 133 may select and receive a desired application from among applications that are open to the public through a network.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180.

The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

In addition, a part of content data stored in the display device 100 may be transmitted to a selected user among a selected user or a selected electronic device among other users or other electronic devices registered in advance in the display device 100.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100. Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

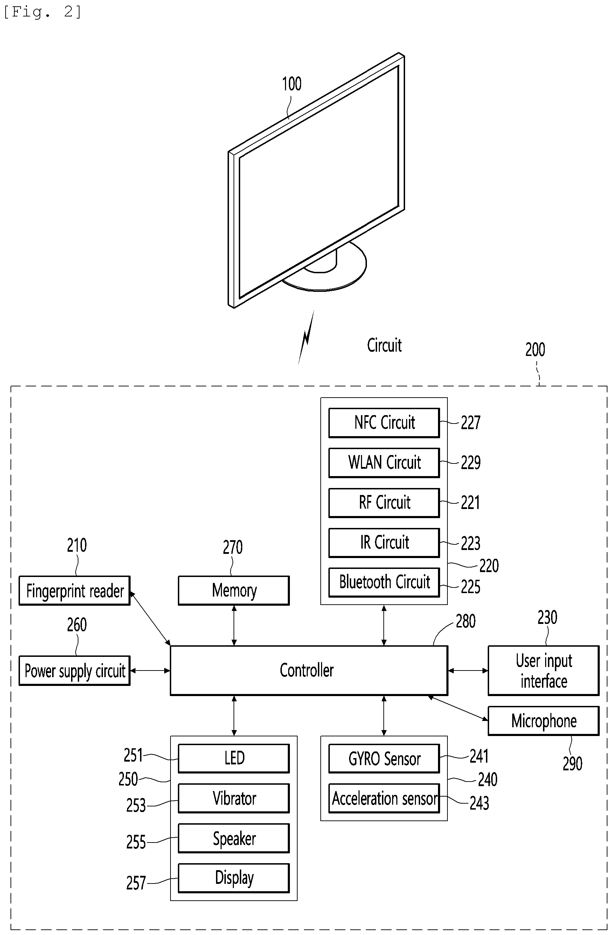

Next, a remote control device according to an embodiment of the present disclosure will be described with reference to FIGS. 2 to 3.

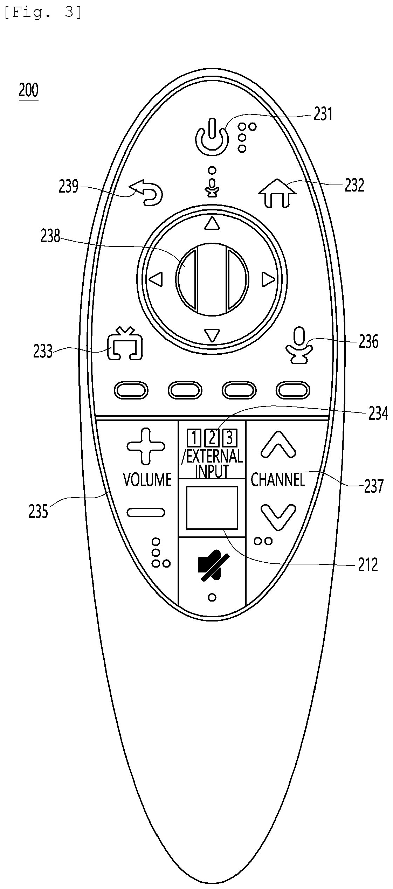

FIG. 2 is a block diagram of a remote control device according to an embodiment of the present disclosure, and FIG. 3 shows an actual configuration example of a remote control device 200 according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard.

In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation. The power button 231 may be a button for turning on/off the power of the display device 100. The home button 232 may be a button for moving to the home screen of the display device 100. The live button 233 may be a button for displaying a real-time broadcast program.

The external input button 234 may be a button for receiving an external input connected to the display device 100. The volume control button 235 may be a button for adjusting the level of the volume output by the display device 100. The voice recognition button 236 may be a button for receiving a user's voice and recognizing the received voice. The channel change button 237 may be a button for receiving a broadcast signal of a specific broadcast channel. The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100. The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication interface 225.

In addition, the power supply circuit 260 may supply power to the remote control device 200, and stop power supply when the remote control device 200 has not moved for a predetermined time to reduce power consumption. The power supply circuit 260 may restart power supply when a predetermined key provided in the remote control device 200 is operated.

The memory 270 may store various types of programs and application data required for control or operation of the remote control device 200. When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 235 or a signal corresponding to the movement of the remote control device 200 sensed by the sensor 240 through the wireless communication interface 225.

Also, the microphone 290 of the remote control device 200 may obtain a speech.

The microphone 290 may include at least one microphone device 291 and may acquire voice through the microphone device 291.

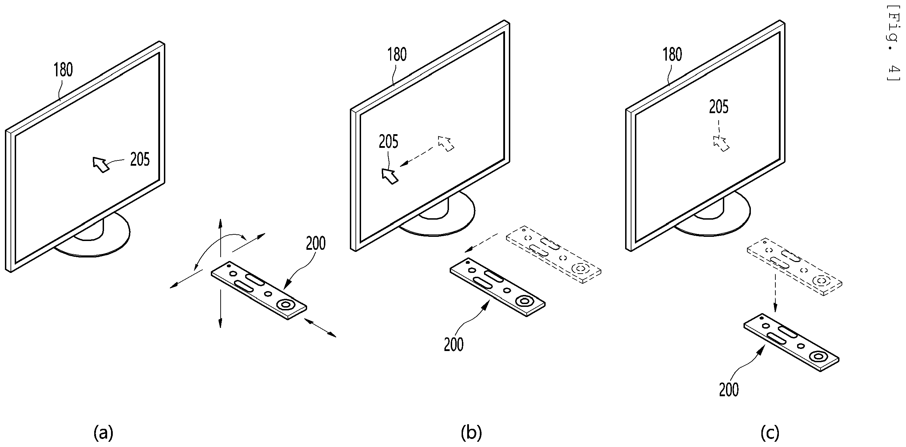

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200.

Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205.

For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

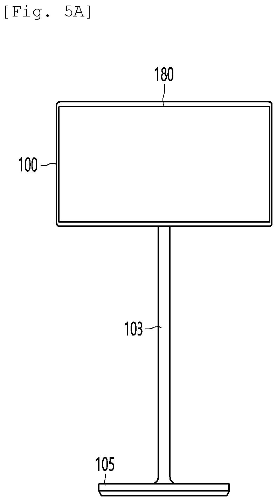

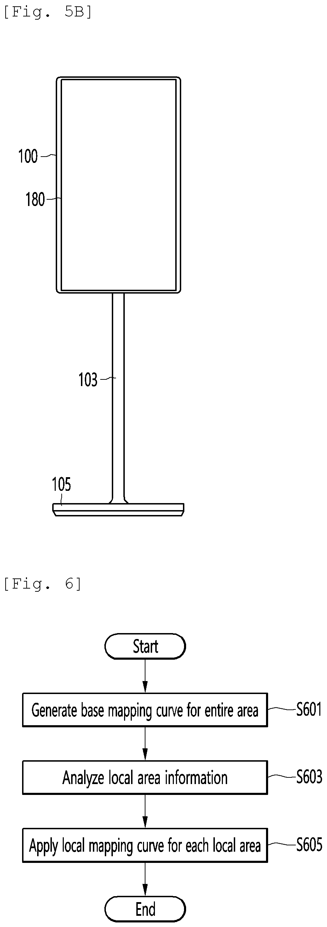

Fig. 5A and Fig. 5B are drawings for explaining the horizontal mode and the vertical mode of the stand type display device according to the embodiment of the present disclosure.

Referring to Fig. 5A and Fig. 5B, a stand type display device 100 is illustrated.

A shaft 103 and a stand base 105 can be connected to the display device 100.

The shaft 103 can connect the display device 100 and the stand base 105. The shaft 103 can be extended vertically.

The lower end of the shaft 103 may be connected to the edge of the stand base 105.

The lower end of the shaft 103 may be rotatably connected to the periphery of the stand base 105.

The display device 100 and the shaft 103 may be rotated about a vertical axis relative to the stand base 105.

The upper end of the shaft 103 may be connected to the rear end of the display device 100.

The stand base 105 may serve to support the display device 100.

The display device 100 may be configured to include the shaft 103 and the stand base 105.

The display device 100 may be rotated about a point where the upper end of the shaft 103 and the rear end of the display 180 meet.

Fig. 5A indicates that the display 180 operates in a horizontal mode in which the horizontal length is greater than the vertical length, and Fig. 5B indicates that the display 180 operates in a vertical mode in which the vertical length is greater than the horizontal length.

The user can move the stand-type display device 100. That is, unlike a fixed device, the stand-type display device 100 has improved mobility, so the user is not restricted by the placement location.

The display device 100 according to the embodiment may include a controller 170 that performs tone mapping to adjust the luminance of input image data.

The display device 100 may include a display 180 that displays an image according to output image data whose luminance is adjusted by the tone mapping performed in the controller 170.

The controller 170 can generate a base mapping curve for the entire area from the input image data. The controller 170 can extract local area information of the entire area and generate a local mapping curve in which the local area information is reflected for each local area. The controller 170 can perform tone mapping for each local area using the local mapping curve in which the local area information is reflected. An image according to the output image data in which local mapping is performed for each local area in the controller 170 can be displayed on the display 180.

The base mapping curve can include a dynamic contract curve for the entire area. The local mapping curve can include a local contrast curve for the corresponding local area.

The controller 170 can extract local area information of the entire area and generate an adaptive local contrast curve for each local area from the mapping curve of the entire area based on the extracted local area information. The controller 170 can perform tone mapping for each local area by using an adaptive local contrast curve generated for each local area.

The display 180 can be provided as a flat display.

Hereinafter, a process of performing tone mapping in a display device according to an embodiment will be further examined with reference to FIG. 6.

FIG. 6 is a flowchart illustrating a method of driving a display device according to an embodiment of the present disclosure.

The controller 170 can generate a base mapping curve for the entire area (S601).

According to the driving method of the display device 100 according to the embodiment, the controller 170 can generate a base mapping curve for the entire area from input image data.

As an example, the base mapping curve can be generated through HDR (High Dynamic Range) processing of the input image data.

The base mapping curve generated by the controller 170 can include a DTM (Dynamic Tone Mapping) curve and a DC (Dynamic Contrast) curve.

The controller 170 can receive metadata together when receiving image data. The input image data can be an HDR image. The metadata can include information about the input image data. The metadata can include at least one of luminance information of the HDR image, maximum brightness information by scene, and information for identifying the HDR image.

In addition, the controller 170 can produce a luminance distribution histogram in the entire area of the input image data. The luminance distribution histogram of the HDR image can mean distribution information of brightness values of each pixel of the HDR image. The controller 170 can produce a luminance distribution histogram, which is a distribution for each signal level (e.g., 0 to 1023) of the pixels of the HDR image.

The controller 170 can generate a DTM curve based on the luminance distribution histogram information for the input image data. The DTM curve can mean a mapping curve in the RGB domain. In the RGB domain, mapping can be performed from the input image data to the output image data according to the generated DTM curve.

The controller 170 can generate a DC curve. The DC curve can mean a mapping curve in the luminance (Y) domain. In the luminance (Y) domain, mapping can be performed from the input image data to the output image data according to the generated TC curve.

Meanwhile, in order to generate output image data suitable for the characteristics of the display 180 for the input image data, a method of generating a DTM curve and a DC curve in the controller 170 is known, so a detailed description thereof will be omitted here.

Next, the controller 170 can analyze local area information (S603).

According to the driving method of the display device 100 according to the embodiment, the controller 170 can extract local area information of the entire area. The controller 170 can extract information of each local area constituting the entire area.

As an example, the local area information can be extracted from a detail map generated based on pixel information of the entire area. The detail map can include APL (Average Picture Level) information and sharpness information for each local area.

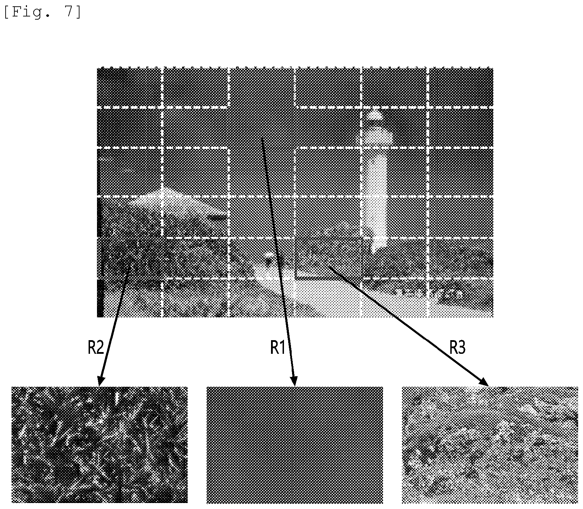

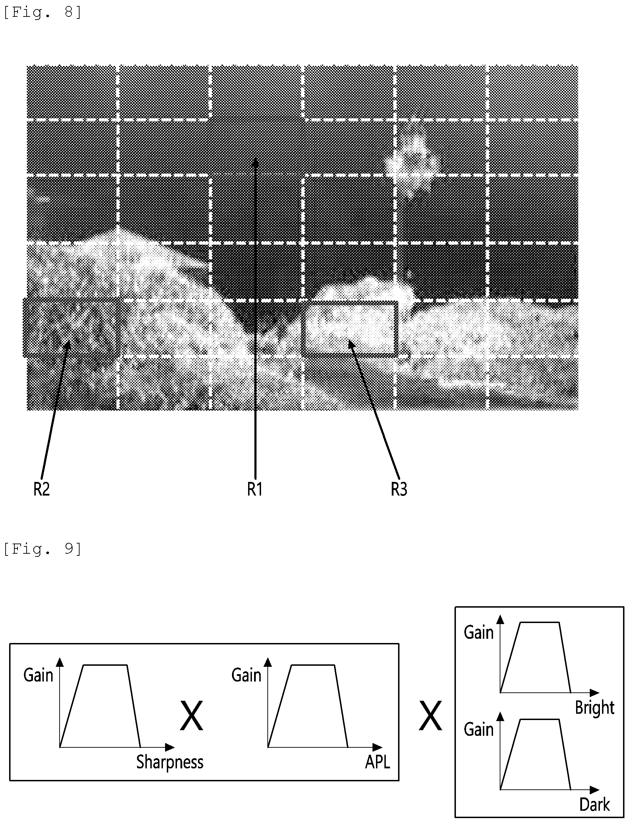

Referring to FIGS. 7 and 8, a detail map according to an embodiment will be examined.

FIG. 7 is a diagram showing an example of an HDR processed image according to an embodiment of the present disclosure, and FIG. 8 is a diagram explaining a detail map of an image shown in FIG. 6 according to an embodiment of the present disclosure.

FIG. 7 shows an HDR processed image according to an embodiment, and the entire area of the image can be divided into a plurality of local areas.

The plurality of local areas can be divided into an arbitrary number for the entire area in consideration of the image processing speed and effect. For example, when the entire area of the image has a resolution of (1920*1080), the plurality of local areas can be provided in a number of (96*54). This is just one example, and the size and number of the plurality of local areas can be varied as needed.

FIG. 8 shows the detail degree of the entire area of the image shown in FIG. 7. The detail degree (detail level) may be the amount of change in luminance value for adjacent pixels within a certain distance. The detail degree of each pixel may mean the step (or rate of change) between each pixel and adjacent pixels. A pixel with a large change in color or luminance compared to surrounding pixels may mean a pixel with a large detail degree.

For example, a detail map may be extracted by applying a Laplacian filter to the entire area. The detail map may be extracted using various other tools or in other ways.

Local area information may be extracted from a detail map generated based on pixel information of the entire area. The detail map may include APL information and sharpness information for each local area.

The APL information for each local area may mean the brightness level of each local area. The sharpness information for each local area may mean the detail degree of each local area.

For example, the first area R1 illustrated in FIGS. 7 and 8 may be determined as an area with no change in detail degree. The first region R1 illustrated in FIGS. 7 and 8 may be determined as a region without sharpness.

In addition, the second region R2 and the third region R3 illustrated in FIGS. 7 and 8 may be determined as regions with changes in detail degree. The second region R2 and the third region R3 illustrated in FIGS. 7 and 8 may be determined as regions with sharpness.

It can be seen that the first region R1, the second region R2, and the third region R3 illustrated in FIGS. 7 and 8 have different APL levels.

In this way, the controller 170 may extract APL information and sharpness information of each local area from the detail map.

Next, the controller 170 may apply a local mapping curve for each local area (S605).

Let us examine the process of generating a local mapping curve for each local area in the controller 170 of the display device 100 according to the embodiment, and applying the generated local mapping curve to the tone mapping of the corresponding local area.

The display device 100 according to the embodiment of the present disclosure does not perform tone mapping using the same mapping curve for the entire area. The display device 100 according to the embodiment can generate a local mapping curve for each local area in which information of each local area is reflected, and perform tone mapping using the local mapping curve for each local area.

The display device 100 according to the embodiment can generate an adaptive local contrast curve for each local area based on the extracted local area information, and perform tone mapping for each local area.

The controller 170 can generate a local mapping curve for each local area in which the local area information is reflected. The controller 170 can generate a local mapping curve for each local area using APL information and sharpness information of each local area.

For example, each region of the first region R1, the second region R2, and the third region R3 has different APL levels and sharpness levels. That is, the APL value of each region is different from each other, and the sharpness value of each region is different from each other. Accordingly, local mapping curves suitable for each region can be generated differently.

The controller 170 can generate a first local mapping curve for the first region R1 based on the APL information and sharpness information of the first region. The controller 170 can generate a second local mapping curve for the second region R2 based on the APL information and sharpness information of the second region. The controller 170 can generate a third local mapping curve for the third region R3 based on the APL information and sharpness information of the third region.

For example, the first region R1 can be determined as a region with no change in the detail degree. That is, the first region R1 can be determined as a region without sharpness. The controller 170 can perform local tone mapping using the base mapping curve generated for the entire region without generating a separate first local mapping curve for the first region R1.

The second region R2 can be determined as an area with a change in the detail degree. That is, the second region R2 can be determined as an area with sharpness. The controller 170 can generate a separate second local mapping curve for the second region R2 and perform local tone mapping for the second region R2 using the generated second local mapping curve.

As an example, the controller 170 can generate a second local mapping curve that can enhance brightness and contrast for the second region R2. If the level of sharpness of the local area is high, the controller 170 can enhance brightness and contrast of the local area. The controller 170 can perform local tone mapping for the second region R2 by applying the second local mapping curve instead of the DC curve among the base mapping curves generated for the entire region.

The third region R3 can be determined as an area with a change in the detail degree. That is, the third region R3 can be determined as an area with sharpness. The controller 170 can generate a separate third local mapping curve for the third region R3 and perform local tone mapping for the third region R3 using the generated third local mapping curve.

As an example, the controller 170 can generate a third local mapping curve that can enhance brightness and contrast for the third region R3. If the sharpness level of the local area is high, the controller 170 can enhance brightness and contrast of the local area. The controller 170 can perform local tone mapping for the third region R3 by applying the third local mapping curve instead of the DC curve among the base mapping curves generated for the entire region.

The controller 170 can perform tone mapping for each local area using the local mapping curve that reflects the local area information.

According to an embodiment, a local mapping curve may be generated by additionally adjusting a contrast curve in which local area information is reflected for each local area to a base mapping curve generated for the entire area.

As an example, a local mapping curve for the first region R1 may include a DTM curve (applied to the RGB domain) of a base mapping curve generated for the entire area and a DC curve (applied to the luminance domain) of a base mapping curve generated for the entire area.

A local mapping curve for the second region R2 may include a DTM curve (applied to the RGB domain) of a base mapping curve generated for the entire area and a second local mapping curve (applied to the luminance domain) generated for the second region.

A local mapping curve for the third region R3 may include a DTM curve (applied to the RGB domain) of a base mapping curve generated for the entire area and a third local mapping curve (applied to the luminance domain) generated for the third region.

In this way, according to the display device and the driving method thereof according to the embodiment of the present disclosure, the contrast ratio in the local area can be improved by utilizing information of the local area of the image, and the three-dimensionality of the image and the user's sense of immersion can be improved.

According to the display device and the driving method thereof according to the embodiment of the present disclosure, the brightness and sharpness information of each local area of an image can be utilized to improve the contrast ratio in the local area, and the three-dimensionality and user immersion of the image can be improved.

According to the display device and the driving method thereof according to the embodiment of the present disclosure, the contrast ratio in the local area can be improved, and the three-dimensionality and user immersion of the image can be improved by generating an adaptive local contrast curve for each local area based on the extracted local area information and performing tone mapping.

FIG. 9 is a drawing explaining the application of gain control of a local area according to detail map information according to the embodiment of the present disclosure.

The controller 170 of the display device 100 according to the embodiment can extract sharpness information and APL information of each local area from the detail map, and determine the degree of brightness enhancement and the degree of contrast enhancement for the corresponding local area.

The controller 170 can determine the degree of brightness enhancement, degree of contrast enhancement, etc. for each local area by using at least one of the sharpness information and the APL information of each local area.

As an example, as illustrated in FIG. 9, the controller 170 can extract the degree of brightness enhancement and/or the degree of contrast enhancement in each local area by calculating the gain according to the degree of sharpness and the gain according to the degree of APL in each local area. Through this process, the controller 170 can detect a local area of interest to which brightness enhancement and/or contrast enhancement will be processed.

In addition, the controller 170 can calculate the gain for the degree of brightness and the gain for the degree of darkness for the gain of the detected local area of interest, respectively, to adjust the output gain compared to the input.

Through this process, the controller 170 can determine the brightness enhancement degree and the contrast enhancement degree for each local area from the sharpness information and the APL information in each local area.

Meanwhile, the display device 100 according to the embodiment described above has been described based on the case where the display 180 is provided in a flat shape.

The controller 170 according to the embodiment can generate a local mapping curve in which at least one of the APL information, sharpness information, and location information of each local area is reflected, and perform tone mapping for each local area, when the display 180 is provided as a curved display or a bendable display.

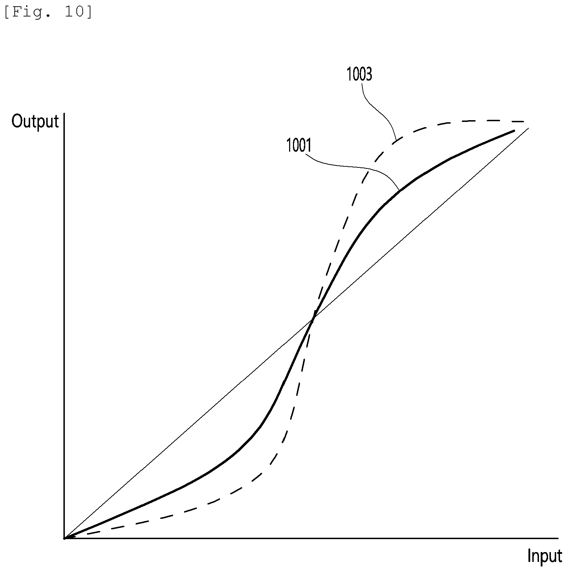

FIG. 10 is a drawing explaining an example of a local area contrast curve applied to a local area according to an embodiment of the present disclosure.

The controller 170 of the display device 100 according to the embodiment can extract local area information of the entire area and generate a local area contrast curve in which the local area information is reflected for each local area.

The local area contrast curve may refer to the first local mapping curve, the second local mapping curve, and the third local mapping curve described above.

The first curve 1001 illustrated in FIG. 10 may be a DC curve of a base mapping curve for the entire area. The second curve 1003 illustrates an example of a local area contrast curve.

The second curve 1003 may correspond to the first local mapping curve, the second local mapping curve, and the third local mapping curve described with reference to FIGS. 5 to 8. At this time, the second curve 1003 can have its contrast adjusted from the gain determined from the APL information and sharpness information of the local area. The first local mapping curve, the second local mapping curve, and the third local mapping curve can be generated based on the information of each local area, and can be generated as local contrast curves of different shapes.

In addition, the second curve 1003 can correspond to the first local mapping curve, the second local mapping curve, and the third local mapping curve described with reference to FIG. **9****.** At this time, the second curve 1003 can have its contrast adjusted from the gain determined from the APL information, sharpness information, and location information of the local area. The first local mapping curve, the second local mapping curve, and the third local mapping curve can be generated based on the information of each local area, and can be generated as local contrast curves of different shapes.

Meanwhile, the controller 170 of the display device 100 according to the embodiment can set the maximum value of the second curve 1003. This is because, if the contrast is excessively enhanced, problems such as low-grayscale burying and high-grayscale saturation can occur. As an example, if the second curve 1003 illustrated in FIG. 10 is a curve indicating the maximum value set by the controller 170, the first, second, and third local mapping curves generated for each local area can be generated to have values between the first curve 1001 and the second curve 1003.

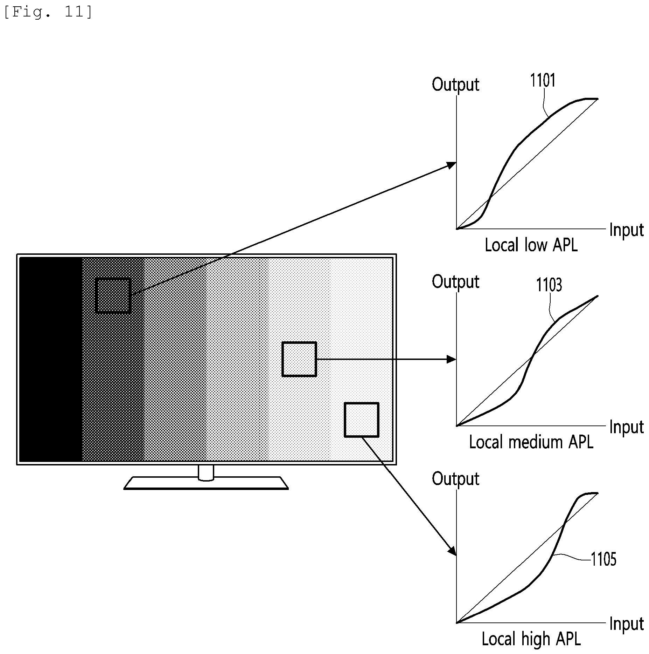

FIG. 11 is a drawing explaining an example of a local contrast curve applied to each APL according to an embodiment of the present disclosure.

The controller 170 of the display device 100 according to the embodiment can generate different adaptive local contrast curves according to APL information of the local area.

As an example, the controller 170 can cause the local contrast curve of the first curve 1101 to be generated when the APL degree of the local area has a relatively low value. The controller 170 can cause the local contrast curve of the second curve 1103 to be generated when the APL degree of the local area has a relatively medium value. The controller 170 can cause the local contrast curve of the third curve 1105 to be generated when the APL degree of the local area has a relatively high value.

As an example, the second curve 1103 when the APL degree of the local area has a relatively medium value can be set such that the APL value of the point where the ratio of the input value to the output value is 1 has a larger APL value than the first curve 1101. The second curve 1103 when the APL degree of the local area has a relatively medium value can be set such that the APL value of the point where the ratio of the input value to the output value is 1 has a smaller APL value than the third curve 1105.

In this way, the controller 170 can adjust the shape of the local contrast curve of the local area according to the APL degree of the local area. By measuring the degree of change in the local contrast curve of the local area according to the change in the APL degree of the local area in the display device 100, it can be determined whether the adaptive local mapping curve concept proposed in the present disclosure has been applied. If the local contrast curve tends to change according to the change in the APL degree of the local area, it can be determined that the adaptive local mapping curve concept proposed in the present disclosure has been applied.

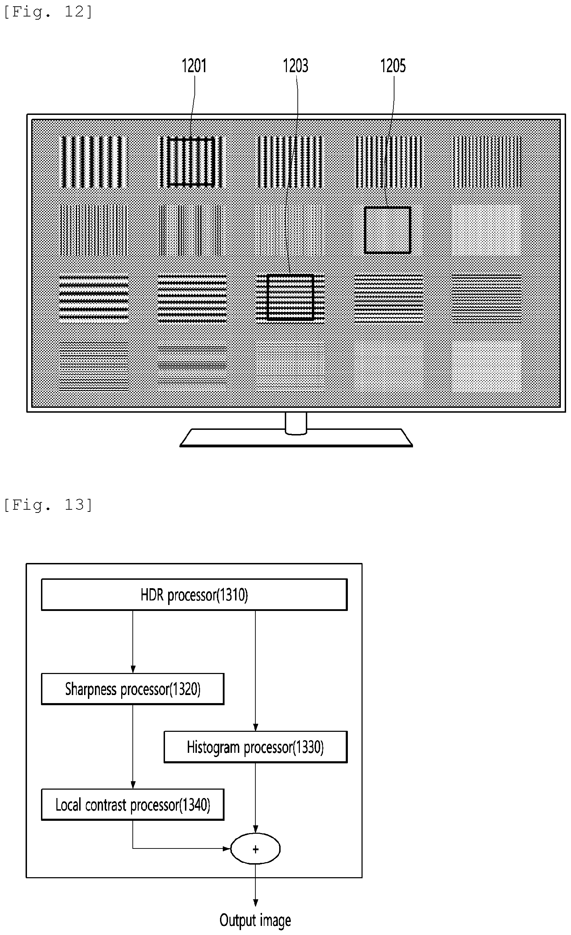

FIG. 12 is a drawing explaining a case where different sharpnesses are applied in the same APL according to an embodiment of the present disclosure.

The controller 170 of the display device 100 according to the embodiment can generate different adaptive local contrast curves according to the sharpness information of the local area.

As an example, the controller 170 can cause the local contrast to tend to be larger as the sharpness of the local area is stronger in local areas with the same APL degree. The controller 170 can generate a local contrast curve of the local area such that the bright region becomes brighter and the dark region becomes darker as the sharpness of the local area is stronger.

The controller 170 can generate local contrast curves having different contrast tendencies for different sharpnesses of the same APL.

The controller 170 can generate a local contrast curve having a relatively high contrast tendency for a first sharpness pattern 1201 having a relatively high sharpness value. The controller 170 can generate a local contrast curve having a relatively medium contrast tendency for a second sharpness pattern 1203 having a relatively medium sharpness value. The controller 170 can generate a local contrast curve having a relatively low contrast tendency for a third sharpness pattern 1205 having a relatively low sharpness value.

In this way, the controller 170 can adjust the shape of the adaptive local contrast curve according to the sharpness level of the local area. By detecting the degree of change in local contrast through luminance measurement for the change in the degree of sharpness of a local area in display device 100, it can be determined whether the adaptive local mapping curve concept proposed in the present disclosure has been applied. If there is a tendency for the local contrast to change through luminance measurement for the change in the degree of sharpness of a local area, it can be determined that the adaptive local mapping curve concept proposed in the present disclosure has been applied.

Meanwhile, the following discloses a display device and an operating method thereof that provides a service with a further improved contrast ratio by lowering the saturation level of an image processed according to the aforementioned tone mapping method, thereby securing a margin for the contrast ratio/detail expressible through local tone mapping.

In the following, any content overlapping with the aforementioned content may be cited and any overlapping description may be omitted.

The present disclosure may be particularly effective for HDR processed images, but is not limited thereto. In other words, it is disclosed in advance that the present disclosure is applicable to SDR, LDR processed images.

The display device 100 according to one embodiment of the present disclosure is, for example, one that employs an OLED panel as a display panel, but is not limited thereto.

In the case of a display device employing an OLED panel, there may be a limit to the improvement of contrast ratio/expressiveness (detail) due to the saturation level of the image that appears in the HDR tone mapping processed image, so that a sufficient margin can be secured in order to eliminate this limitation.

FIG. 13 is a block diagram of a display device according to another embodiment of the present disclosure.

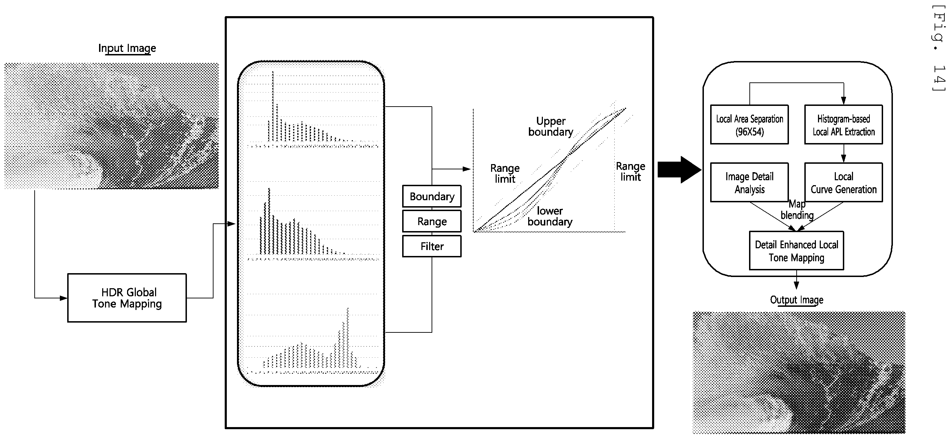

FIG. 14 is a block diagram of a display device according to another embodiment of the present disclosure.

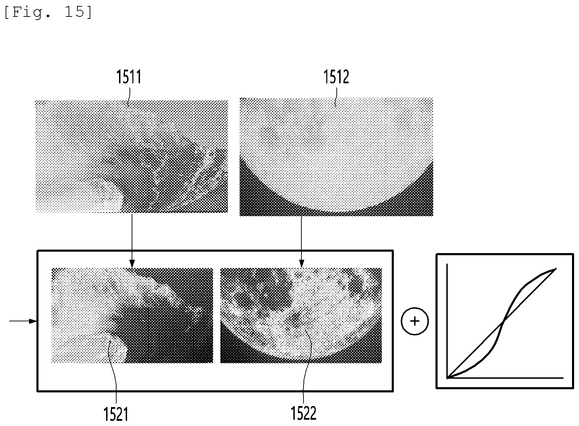

FIG. 15 is a diagram illustrating the operation of an HDR processor and a sharpness processor among the components of FIG. 13.

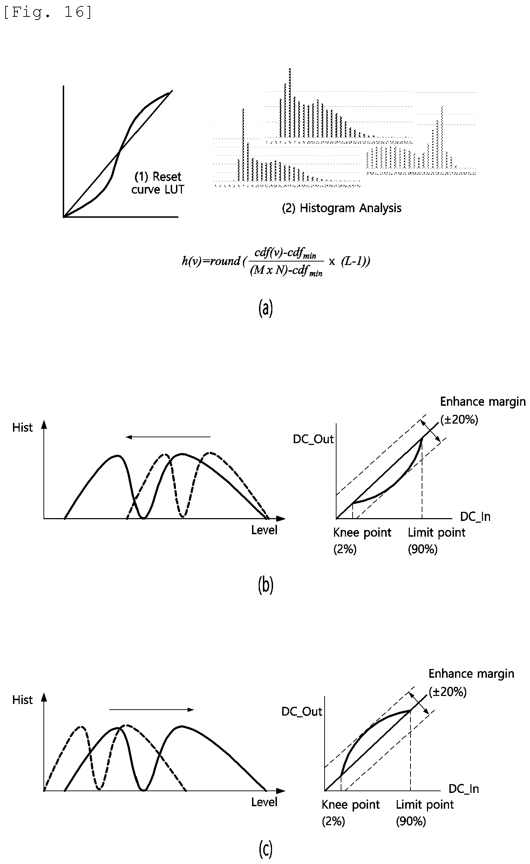

FIG. 16 is a drawing illustrating the operation of the histogram processor among the components of FIGS. 13 and 14.

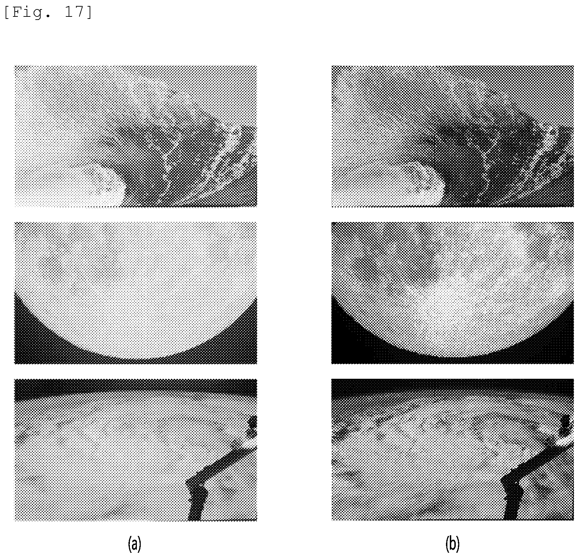

FIG. 17 is a drawing illustrating a comparison between an image before and after the application of an embodiment of the present disclosure.

First, referring to FIG. 13, the display device 100 may be configured to include a HDR processor 1310, a sharpness processor 1320, a histogram processor 1330, a local contrast processor 1340, etc.

To this end, the display device according to at least one of the various embodiments of the present disclosure may include a controller that performs tone mapping to adjust the brightness of input image data and a display that displays an image according to output image data whose brightness is adjusted by the tone mapping.

In the above, the controller may control to lower the saturation level of the input image data on which the tone mapping was performed and perform local tone mapping.

At this time, the controller may lower the saturation level of the input image data on which the tone mapping was performed through histogram equalization processing.

In the above, the HDR processor 1310 can perform HDR processing on the input image.

For example, referring to FIG. 15, different images 1511, 1512 can be HDR processed images.

The HDR processed images 1511, 1512 can be input to the sharpness processor 1320.

The sharpness processor 1320 can extract a detail map from the HDR processed input image.

And the sharpness processor 1320 can obtain a map gain using the detail map extracted from the HDR processed input image.

The input HDR processed images 1511, 1512 can be input to the sharpness processor 1320 and become images 1521, 1522 illustrated in FIG. 15.

The detail map and map gain acquired from the sharpness processor 1320 may be input to the local contrast processor 1340.

Meanwhile, the sharpness processor 1320 may transfer or not share the acquired detail map and map gain with the histogram processor 1330 described below.

The local contrast processor 1340 may perform local tone mapping based on the APL of the image.

Meanwhile, the operation of the display device 100 according to the above-described embodiment before FIG. 13 may be suitable for, for example, local brightness and contrast ratio enhancement based on the detail map. Therefore, in the case of high- and medium-gray expression, the effect may be reduced because the saturation level of the image is high.

Therefore, in the following, the saturation level of the image is lowered to enable detail expression.

In relation to this, the histogram processor 1330 may perform reading/writing processing of histogram information from an input image.

At this time, the histogram processor 1330 may only receive an HDR-processed image from the HDR processor 1310 before the operation, and may not separately receive data from the remaining components.

In relation to this, the histogram processor 1330 may preprocess an image to improve the saturation level of the image due to HDR processing by utilizing an area in the local contrast processor 1340.

The output of the histogram processor 1330 may be used as an input of the local contrast processor 1340. That is, the local contrast processor 1340 is characterized by performing local tone mapping on an image with an improved saturation level. At this time, the local contrast processor 1340 can apply local tone mapping based on the corresponding image quality.

The specific processing processor for the HDR processed image illustrated in FIG. 13 may be as follows. However, this is only an example, and the present disclosure is not limited thereto.

The histogram processor 1330 can extract histogram information for the HDR processed image.

The sharpness processor 1320 can extract detail map information.

The histogram processor 1330 can calculate a CDF (Cumulative Distribution Function) considering the data range of the image.

The histogram processor 1330 can perform histogram equalization processing in which the saturation, boundary, etc. of the output image are preset.

FIG. 16A illustrates an example of a reset curve LUT, an example of a histogram analysis graph, and an example of a mathematical formula for histogram analysis. Meanwhile, FIGS. 16B and 16C illustrate graphs for explaining a histogram processing method according to an embodiment of the present disclosure. At this time, a pattern case may be excluded. The pattern case may indicate, for example, a case where only two types of levels or less exist.

FIG. 16B illustrates an example of histogram equalization for a bright distribution image. In the left graph, the dotted line portion where the histogram is concentrated in a high level is spread or shifted to not only a bright area (high level) but also a dark area (low level), like the solid line portion in the present disclosure, and is flattened, i.e., histogram equalization is processed. In this way, by performing histogram equalization processing, it can be seen that the margin representing DC_In compared to DC_out is expanded from the knee point (2%) to the limit point (90%) to +- 20%.

Meanwhile, FIG. 16C shows an example of histogram equalization for a dark distribution image. In the left graph, the dotted line portion where the histogram is concentrated in the low level is spread or shifted to the bright area (high level) as well as the dark area (low level), like the solid line portion, and is flattened, that is, histogram equalization is processed. In this way, it can be seen that by performing histogram equalization processing, the margin representing DC_In compared to DC_out is expanded from the knee point (2%) to the limit point (90%) to +- 20%.

In this way, the saturation level can be drastically lowered through the histogram equalization processing according to one embodiment of the present invention.

Meanwhile, in the present disclosure, one embodiment uses histogram information to lower the saturation level of the HDR processed image.

And the controller can extract histogram information of the input image data on which the tone mapping is performed.

In addition, the controller can control to perform the histogram equalization processing based on the extracted histogram information.

In addition, the controller can control the histogram equalization processing by shifting the histogram value from the extracted histogram information according to the histogram distribution so that it is not saturated.

And the controller can control the histogram equalization processing by spreading the histogram value from the extracted histogram information according to the histogram distribution so that it is not saturated.

In addition, the controller can control histogram equalization processing to be performed only for images having preset grayscale values of input image data.

And the preset grayscale values may not include grayscale values representing low grayscale and high grayscale.

The local contrast processor 1340 can perform local tone mapping based on the processed images.

Therefore, the display device 100 according to one embodiment of the present disclosure can easily lower the saturation level of an HDR image, thereby securing sufficient margin for improving detail and contrast ratio of the image.

In relation to this, the display device 100 according to one embodiment of the present disclosure can efficiently lower the saturation level of an HDR image by applying optimized histogram equalization considering a level range/boundary area.

And, the display device 100 can provide an HDR image with greatly improved image quality, as shown in FIG. 17B, in which the contrast ratio expression and detail of the HDR image are maximized by performing local tone mapping on an HDR processed image, such as FIG. 17A, based on an image with histogram-processed image quality.

Referring to FIG. 14, the display device 100 performs HDR global tone mapping on an input image based on image metadata, and then generates an output image by processing HDR local tone mapping after histogram equalization processing.

At this time, the histogram equalization processing performs a histogram analysis for each scene of the image, and passes it through a Boundary, a Range, and a Filter, and sets a Range limit as shown in Fig. 14, and sets an upper boundary and a lower boundary to filter, thereby generating and applying an Adaptive Global histogram equalization curve.

Meanwhile, the HDR local tone mapping processing can first separate a local area (for example, 96x54) for an image to which an adaptive global histogram equalization curve is applied. A histogram-based local APL can be extracted for the separated local area. A local curve can be generated based on the extracted histogram-based local APL. Meanwhile, image detail analysis is performed, and the result is map blended with the generated local curve to perform Detail Enhance Local Tone Mapping processing.

An image that has undergone Detail Enhance Local Tone Mapping processing in this manner can become an output image.

Meanwhile, a controller according to an embodiment of the present disclosure can perform tone mapping by generating a base mapping curve for the entire area from the input image data as input image data, extracting local area information of the entire area, and generating a local mapping curve in which the local area information is reflected for each local area.

In addition, the display device can further include an HDR processor that performs HDR processing on the input image data.

In addition, the input image data can include image data on which HDR processing has been performed.

In addition, the controller can generate an adaptive local contrast curve for each corresponding local area from the base mapping curve based on the extracted local area information.

And the local area information is extracted from a detail map generated based on pixel information of the entire area, and the detail map may include APL information and sharpness information for each local area.

Through this, according to at least one of the various embodiments of the present disclosure, the contrast ratio in the local area can be improved by using the histogram information of the image, and the three-dimensionality and user immersion of the image can be improved. This can be achieved by lowering the saturation level of the image by using the histogram information of the image, thereby applying a local tone curve to secure sufficient margin for contrast ratio and detail improvement for the local area, thereby further improving expressiveness.

Even if not specifically mentioned, the order of at least some of the operations disclosed in the present disclosure may be performed simultaneously, performed in a different order from the described order, or some may be omitted/added.

The display device described above is not limited to the configuration and method of the embodiments described above, and the embodiments may be configured by selectively combining all or part of each embodiment so that various modifications can be made.

The above description is merely an example of the technical idea of the present disclosure, and those with ordinary knowledge in the technical field to which the present disclosure belongs may make various modifications and variations without departing from the essential characteristics of the present disclosure.

Therefore, the disclosed embodiments are not intended to limit the technical idea of the present disclosure but to explain it, and the scope of the technical idea of the present disclosure is not limited by these embodiments.

The protection scope of the present disclosure should be interpreted by the claims below, and all technical ideas within the equivalent scope should be interpreted as being included in the scope of the rights of the present disclosure.

## Claims

1. A display device (100), comprising:
a display (180);
a controller (170) configured to:
perform tone mapping to adjust luminance of input image data to obtain luminance-adjusted image data;
lower a saturation level of the luminance-adjusted image data;
perform local tone mapping after lowering the saturation level of the luminance-adjusted image data; and
cause the display to output an output image based on the local tone mapping.

2. The display device (100) of claim 1, wherein the controller (170) is configured to lower the saturation level through histogram equalization processing.

3. The display device (100) of claim 2, wherein the controller (170) is configured to extract histogram information of the input image data on which the tone mapping is performed.

4. The display device (100) of claim 3, wherein the controller (170) is configured to perform the histogram equalization processing based on the extracted histogram information.

5. The display device (100) of claim 4, wherein the controller (170) is configured to:
generate a base mapping curve for an entire area of the input image data comprising a plurality of local areas;
extract local area information for each of the plurality of local areas of the entire area; and
perform the tone mapping by generating a local mapping curve in which the local area information is reflected for each local area.

6. The display device (100) of claim 4, wherein the histogram equalization processing comprises shifting histogram values from the extracted histogram information according to a histogram distribution to reduce saturation.

7. The display device (100) of claim 4, wherein the histogram equalization processing comprises spreading histogram values from the extracted histogram information according to a histogram distribution to reduce saturation.

8. The display device (100) of claim 7, further comprising an HDR processor (1310) configured to perform HDR processing on the input image data.

9. The display device (100) of claim 1, wherein the input image data includes image data on which HDR processing has been performed.

10. The display device (100) of claim 2, wherein the histogram equalization processing is performed only for images of the input image data having preset grayscale values .

11. The display device (100) of claim 10, wherein the preset grayscale values exclude grayscale values representing low grayscale and high grayscale.

12. The display device (100) of claim 5, wherein the controller (170) is configured to generate an adaptive local contrast curve for each local area from the base mapping curve based on the extracted local area information.

13. The display device (100) of claim 5, wherein the local area information is extracted from a detail map generated based on pixel information of the entire area, and
the detail map includes average picture level (APL) information and sharpness information for each local area.

14. An operating method of a display device (100), comprising:
performing tone mapping to adjust luminance of input image data to obtain luminance-adjusted image data;
lowering a saturation level of the luminance-adjusted image data;
performing local tone mapping after lowering the saturation level of the luminance-adjusted image data; and
causing a display of the display device to output an output image based on the local tone mapping.

15. The operating method of a display device (100) of claim 14, wherein the saturation level of the luminance-adjusted image data is performed through histogram equalization processing.

## Amended claims

### Amended claims in accordance with Rule 137(2) EPC.

1. A display device (100), comprising:
a display (180);
a controller (170) configured to:
perform tone mapping to adjust luminance of input image data to obtain luminance-adjusted image data;
lower a saturation level of the luminance-adjusted image data;
perform local tone mapping after lowering the saturation level of the luminance-adjusted image data; and
cause the display to output an output image based on the local tone mapping,
wherein the controller (170) is configured to lower the saturation level through histogram equalization processing.

2. The display device (100) of claim 1, wherein the controller (170) is configured to extract histogram information of the input image data on which the tone mapping is performed.

3. The display device (100) of claim 2, wherein the controller (170) is configured to perform the histogram equalization processing based on the extracted histogram information.

4. The display device (100) of claim 3, wherein the controller (170) is configured to:
generate a base mapping curve for an entire area of the input image data comprising a plurality of local areas;
extract local area information for each of the plurality of local areas of the entire area; and
perform the tone mapping by generating a local mapping curve in which the local area information is reflected for each local area.

5. The display device (100) of claim 3, wherein the histogram equalization processing comprises shifting histogram values from the extracted histogram information according to a histogram distribution to reduce saturation.

6. The display device (100) of claim 3, wherein the histogram equalization processing comprises spreading histogram values from the extracted histogram information according to a histogram distribution to reduce saturation.

7. The display device (100) of claim 6, further comprising an HDR processor (1310) configured to perform HDR processing on the input image data.

8. The display device (100) of claim 1, wherein the input image data includes image data on which HDR processing has been performed.

9. The display device (100) of claim 1, wherein the histogram equalization processing is performed only for images of the input image data having preset grayscale values.

10. The display device (100) of claim 9, wherein the preset grayscale values exclude grayscale values representing low grayscale and high grayscale.

11. The display device (100) of claim 4, wherein the controller (170) is configured to generate an adaptive local contrast curve for each local area from the base mapping curve based on the extracted local area information.

12. The display device (100) of claim 4, wherein the local area information is extracted from a detail map generated based on pixel information of the entire area, and
the detail map includes average picture level (APL) information and sharpness information for each local area.

13. An operating method of a display device (100), comprising:
performing tone mapping to adjust luminance of input image data to obtain luminance-adjusted image data;
lowering a saturation level of the luminance-adjusted image data;
performing local tone mapping after lowering the saturation level of the luminance-adjusted image data; and
causing a display of the display device to output an output image based on the local tone mapping,
wherein the saturation level of the luminance-adjusted image data is performed through histogram equalization processing.
